# EUROPEAN PATENT SPECIFICATION

(11) **EP 1 513 245 B1**
(45) Date of publication and mention of the grant of the patent: **16.06.2010**
(21) Application number: 04020929.8
(22) Date of filing: 02.09.2004
(51) Int. Cl.: H02K 7/108, H02K 21/22

(54) **Method for manufacturing an electric generator for internal combustion engine**
Verfahren zur Herstellung eines Generators für eine Brennkraftmaschine
Méthode de fabrication d'un générateur électrique pour un moteur à combustion interne

(30) Priority: 04.09.2003 JP 2003312490; 01.07.2004 JP 2004195433; 18.08.2004 US 711024
(43) Date of publication of application: 09.03.2005
(73) Proprietor: Yamaha Motor Electronics Kabushiki Kaisha, Mori-Machi Shuchi-gun Shizuoka-ken (JP)
(72) Inventor: Morimatsu, Masaki, Shuchi-gun Shizuoka-ken (JP)
(74) Representative: Zinkler, Franz

(56) References cited:
- US-A- 3 913 863
- US-A1- 2003 085 092
- PATENT ABSTRACTS OF JAPAN vol. 017, no. 540 (C-1115), 29 September 1993 (1993-09-29) -& JP 05 148531 A (TOYOTA MOTOR CORP), 15 June 1993 (1993-06-15)
- PATENT ABSTRACTS OF JAPAN vol. 014, no. 291 (M-0989), 22 June 1990 (1990-06-22) & JP 02 092489 A (FUJI HEAVY IND LTD), 3 April 1990 (1990-04-03)
- PATENT ABSTRACTS OF JAPAN vol. 010, no. 349 (M-538), 26 November 1986 (1986-11-26) & JP 61 149504 A (NISSAN MOTOR CO LTD), 8 July 1986 (1986-07-08)
- PATENT ABSTRACTS OF JAPAN vol. 1995, no. 03, 28 April 1995 (1995-04-28) -& JP 06 344135 A (TAISEI CORP), 20 December 1994 (1994-12-20)

## Description

### Background of Invention

This invention relates to a method for manufacturing an electrical generator for an internal combustion engine that has an integral connection between the portion carrying the permanent magnets thereof and an element of a one way clutch that connects the starter gear with the engine shaft according to the preamble of claim 1.

In many internal combustion engines an engine shaft, such as, for example, the crankshaft has an extending end that carries an electrical generator such as a magneto, in proximity to a ring or starter gear that is conventionally coupled to the shaft by a one way clutch to permit the shaft to be turned for starting and then permits freewheeling after the engine is running. Conventionally the generator has an annular member that carries permanent magnets that cooperate with the coils of a stator to generate electrical power. The annular member is affixed to a hub member that has a connection for rotation with the engine shaft by splines or one or more keys. Also affixed to this hub is an element of the one way clutch with the other element thereof affixed for rotation with the annular member.

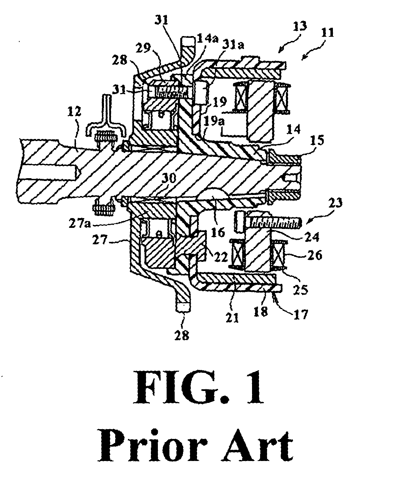

FIG. 1 shows a prior art construction of this general type and is in part similar to those shown in US Patent 6, 534,880, assigned to the assignee hereof. Referring to this figure, an electric generator, indicated generally at 11, is associated with the exposed end portion 12 of an engine crankshaft. A rotor, indicated generally at 13. of the generator 11, includes a hub 14 fitted to a tapered end of the crankshaft portion 12 and is axially fixed thereto by a nut 14 threaded onto the crankshaft end 12. The rotor 13 is fixed against rotation relative to the crankshaft end 12 in a suitable manner, as by means of a key 16. The hub 14 has an integral flange section 14a at one axial end.

The rotor 13 includes a generally cup shaped element, indicated generally at 17, having a cylindrical magnet holding portion 18 integrally formed at the outer periphery of an end wall 19. The end wall 19 has an opening 19a for passing the hub 14. A plurality of circumferentially spaced permanent magnets 21 are suitably fixed to the internal surface of the cylindrical portion 18.

The rotor 13 and the hub 14 are integrally by means of plural (three, for example) rivets 22 disposed around the opening 19a in the end wall 19 of the rotor 13 and the flange section 14a of the hub 14.

Cooperating with the magnets 21 and positioned within the cup-shaped rotor 13 is a stator 23 for generating AC power upon the rotation of the rotor 13. The stator 23 is comprised of a laminated stator yoke 24 having an insulating bobbin 25 around which coils 26 are wound to generate an electromotive force upon the rotation of the rotor 13.

Positioned on the opposite side of the hub end wall 19 is a flywheel 27 having a starter gear 28 formed on its outer peripheral edge for cooperation with a starter motor (not shown). This flywheel 27 has a hub portion 27a that is journalled on the crankshaft portion 12 by an antifriction, needle bearing 30. The flywheel 27 is coupled to the crankshaft end portion 12 for engine starting by means of a one way clutch, indicated generally at 28. The one way clutch 28 is comprised of an outer race 29 that is affixed to the hub portion 14a by threaded fasteners 31 that have their heads 31a accessible through the interior of the rotor cylindrical portion 21 and which pass through openings formed in its integral flange section 14a. The threaded portions of the fasteners are received in tapped openings 31 formed in the outer race 29.

The inner race of the one way clutch 28 is formed by the outer surface of the cylindrical hub portion 27a. Its roller members are received between these races, as is well known in the art.

There are other electric generators in which the hub and the rotor are formed as one unit and fixed to the outer ring section of the one-way clutch by threaded fasteners.

However all of these prior art structures utilize several separate members for the flywheel connection to the one way clutch race thus requiring threaded connections of sufficient depth thus increasing not only the size but also the weight. This increases the inertia and makes the associated engine less responsive to desired speed changes. Also considerable assembly operations are required to further add to the cost.

US 2003/085092 A1 describes a method for manufacturing an electrical generator according to the preamble of claim 1. It is the object of this invention to provide an improved and simplified method for manufacturing electrical generator and starter arrangement for an internal combustion engine.

It is a further object of the invention to provide a lighter weight and less expensive electrical generator and starter arrangement for an internal combustion engine.

The object is achieved by a method according to claim 1.

### Brief Description of Drawings

FIG. 1 is a cross sectional view taken through the rotational axis of a prior art type of generator for an internal combustion engine.

FIG. 2 is a cross sectional view in part similar to FIG. 1 and shows a generator having an integral connection between the portion carrying the permanent magnets and the element of the one-way clutch that connects the starter gear with the engine shaft.

FIG. 3 is an enlarged cross sectional view taken along the same plane as FIG. 2 but showing only the hub of the machine.

FIG. 4 is an end elevational view of the hub looking in the direction of the arrows 4-4 in FIG. 3.

FIG. 5 is an end elevational view of the hub looking in the direction of the arrows 5-5 in FIG. 3.

FIG. 6 is an enlarged view of the area encompassed by the circle 6 in FIG. 3.

FIG. 7 is an enlarged view, in part similar to FIG. 6 showing another embodiment.

FIG. 8 is an enlarged view, in part similar to FIGS. 6 and 7 to explain why the induction hardening can not be performed with a conventional induction hardening coil.

FIG. 9 is an enlarged view, in part similar to FIGS. 6-8 and shows an example of an induction hardening pattern.

FIG. 10 is an enlarged view, in part similar to FIGS. 6-9 and shows an example of an induction hardening tool.

### Detailed Description

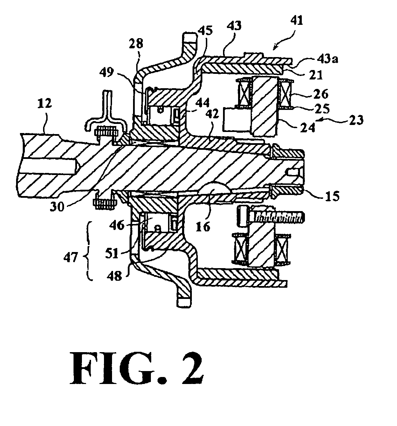

Referring now in detail to the drawings, and initially to FIG. 2, an electrical generator and associated internal combustion engine are shown in a view similar to FIG. 1. Components or parts of components that are the same or substantially the same as the prior art construction previously described are identified by the same reference numerals and will be described again only insofar as is necessary to permit those skilled in the art to understand and practice the invention.

The rotor has an integral hub portion 42 that is fixed to the engine shaft 12 in any conventional manner as by a tapered opening, key 16, and threaded fastener 15. This integral hub portion 42 is unitary with a cylindrical magnet carrier portion 43 that carries on its inner cylindrical surface 43a the plurality of circumferentially spaced permanent magnets 21. These permanent magnets 21 cooperate with the stator assembly 23 in the same manner as in the prior art.

The integral portions 42 and 43 are connected by a stepped end wall having slightly axially offset inner and outer portions 44 and 45, respectively. Rollers 46 of a one way clutch, indicated generally by the reference numeral 47, are held between an outer race forming portion 48 extending from the step formed between the portions 44 and 45 in the opposite axial direction from the magnet carrier portion 43. The rollers 46 are held axially in position by a retainer 49 and are carried by a roller carrier 51.

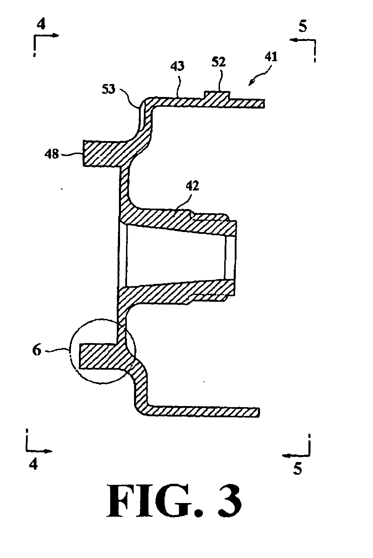

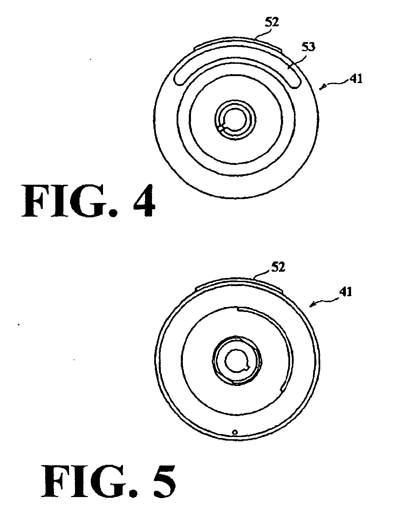

The details of the construction of the integral rotor 41 will now be further discussed by reference to FIGS. 3-6. As already discussed, the rotor 41 is generally constructed with the integral hub portion 42, the magnet carrier portion 43, and the clutch outer race forming portion 48. In addition, the outer surface of the magnet carrier portion 43 is formed with a thick-walled portion or projection 52 for detecting the rotational position of the rotor 41 that extends circumferentially over the predetermined angle range (for example 60 degrees). This cooperates with a sensor (not shown) for detecting the rotational positions of the rotor 41 or its rotational speed. Also, a circumferential notch 53 is formed in the radially outer end wall portion 42b of the magnet carrier portion 43 for counterbalancing weight balance compensating for the thick-walled portion 52.

Thus unlike the case where the rotor only has a function for holding the magnets 21 functions as the integral hub portion 42 as well as the outer race forming portion 48 of the one-way clutch 47. Thus, those bolts and/or rivets previously required for connecting the several separate components can be eliminated. Their elimination also permits the diameter of the one-way clutch 28 can be reduced according with the reduction of the outer race forming portion diameter. Accordingly, the weight of the one-way clutch 28 can be reduced, its moment of inertia can be decreased, and the response at starting can be improved. Furthermore, the number of components can be reduced in comparison with conventional one-way clutches, and therefore the number of man-hours needed to assemble the generator can be reduced.

When the one way clutch 28 is engaged and disengaged, the outer race forming portion 48 receive force directed outward in the radial direction. Thus excessive force may act upon the clutch outer race forming portion 48 of the rotor 41 and the internal surface of the outer race forming portion 48 may wear due to the contact with the possibility that the durability of the rotor 41 decreased. Therefore, the internal surface (end surface) of the outer race forming portion 48 of the one-way clutch in the present embodiment is treated with induction hardening in order to improve its strength.

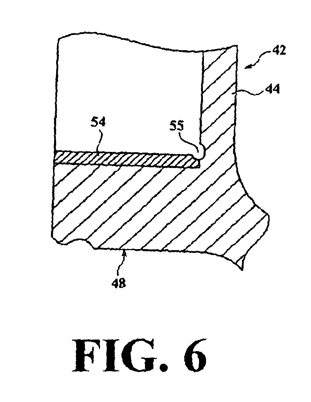

This is shown best in the enlarged view of FIG. 6. As seen there, an induction-hardened section 54 is formed over the area from a boundary between the flange section 44 of the integral hub portion 42 and an outer race forming portion end surface 43a along the internal surface of the outer race forming portion. Accordingly, the clutch outer race forming portion 48 can have the increased hardness than that of other portions and can ensure the durability of the rotor 41 itself even if it slidably contacts with the rollers 46 of the one way clutch 28.

Also as best seen in FIG. 6, a notch 55 is formed during processing at the boundary part between the end surface of the clutch outer race forming portion 48 at the hardened portion 54 and the boss radially inner end wall portion 44 perpendicular to the hardened portion 54. The notch 55 also serves to avoid interference with a corner section of the roller holder 51 during the assembly of the clutch.

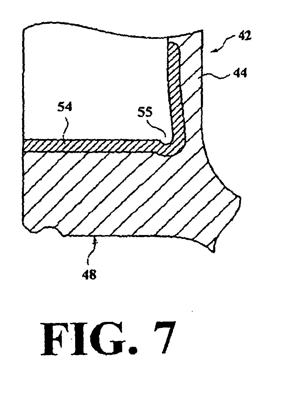

FIG. 7 shows an example of the induction-hardening treatment illustrated in FIG. 6. In this embodiment, consideration is given to the possible occurrence of a crack due to residual stresses produced around the notch 55 as described above. That is to say, measures are taken here such that the range of the induction hardening is expanded to the radially inner end wall portion 44 of the integral hub portion 42 so as to decrease the residual stresses around the notch 55. In addition the shape of the notch 55 itself is enlarged so as not to concentrate the stress in this section during the use of the clutch. In addition, thickness of the radially inner end wall portion 44 itself may be increased so as to increase the strength of the area around the notch 55.

Practically, however, even when the induction hardening is intended for the end surface of the clutch outer race forming portion 48 in the integral-type rotor as well as the radially inner end wall portion 44 of the integral hub portion 42, the induction hardening cannot be applied to a continuous area of the end surface of the clutch outer race forming portion and the radially inner end wall portion 44 as shown in FIG. 7 by merely placing a high frequency coil to the part encompassed by the circle 6 in FIG. 3.

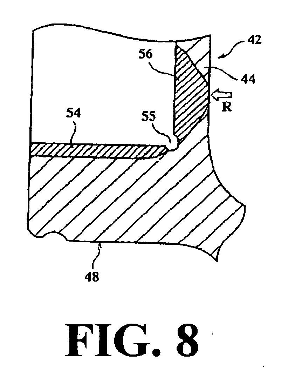

The problem with performing the induction hardening in such a manner using a conventional high frequency induction hardening coil will be explained by reference to Fig. 8. The integral-type rotor of the present invention is the type mounted to, for example, the crankshaft of an engine and requires heat resistance and high strength. Therefore, a material such as S48C containing carbon is used as the rotor material as an example. Here, the end surface of the clutch outer race forming portion is a receiving surface of a pin for the one-way clutch and requires additional high strength. Therefore, the outer race forming portion 48 is treated with the induction hardening 54 for increasing its strength. However, the induction hardening generally done with a high frequency coil (waveguide) made of a square pipe having a rectangular cross section and formed in a ring shape. This high frequency coil is applied to the hardened section and energized to heat the section.

However, when such a high frequency coil is placed facing a fillet of the end surface of the clutch outer race forming portion 48 in the rotor to heat the fillet, the notch 55 formed in the fillet by necessity in processing causes insufficient heating of the depths of the notch 55, resulting in a non-hardened part in the fillet. Therefore, as shown in FIG. 8, the hardened section 54 in the end surface of the clutch outer race forming portion and a hardened section 56 in the radially inner end wall portion 44 become discontinuous at the notch 55, and a boundary of the hardened section is produced. Thus, the stress concentration produced in such hardening discontinuous part (hardening boundary) as well as the stress concentration based on the shape of the notch 55 act upon the fillet to cause the possibility that the fillet may crack.

If, however, the amount of heat is increased in order to harden the depths of the notch 55, the radially inner end wall portion 44 may be melted and damaged. Although the thickness of the radially inner end wall portion 44 could be increased in order to prevent the melting because the weight of the radially inner end wall portion 44 would be increased resulting in increased rotation inertia of the rotor. Therefore other measures for preventing the melting damage should be employed. It is possible to cool the radially inner end wall portion 44 from the backside as shown by an arrow R. However, if the radially inner end wall portion is cooled the heating effect for the notch 55 is decreased and the induction hardening of the fillet cannot be achieved.

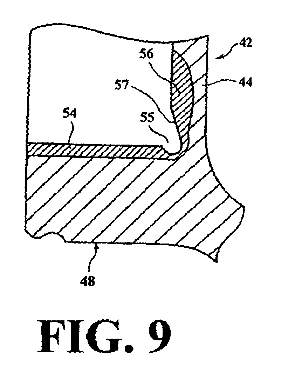

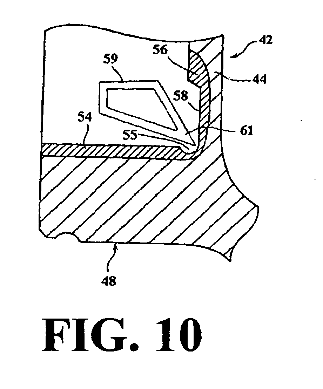

Fig. 9 shows an example of a hardening pattern that may be achieved with an exemplary hardening tool that is shown in Fig. 10. This results, as seen in FIG. 9, the hardened area 56 is provided with a tapered surface 57 in the radially inner end wall portion 44 of the integral hub portion 42 in the rotor, communicating with the notch 55. By forming such tapered surface 57, heat from the high frequency coil (not shown) is sufficiently transferred to the depths of the notch 55, and the depths of the notch 55 is hardened. Accordingly, the hardened section 56 in the radially inner end wall portion 44 is connected to the hardened section 54 in the outer race forming portion 48 the hardened section in the depths of the notch 55. As described above, induction-hardened sections are continuously formed in the fillet with the notch 55, and thus the stress concentration can be reduced, and the possibility of cracking is decreased.

FIG. 10 shows a shape of the hardened section. As shown in FIG. 10 a stepped surface 58 in the radially inner end wall portion 44 of the integral hub portion 42 in the rotor 41, communicating with the notch 55.

As shown in this example, a specially formed high frequency coil 59 having a narrow tip 61 in the cross section is used for high-frequency heating. By forming such a stepped surface 58 and using the high frequency coil 59 having a narrow tip 61 for heating, heat from the high frequency coil 59 is sufficiently transferred to the depths of the notch 55, the depths of the notch 55 is hardened and the hardened section 56 in the radially inner end wall portion 44 is connected to the hardened section 54 in the end surface of the clutch outer race forming portion 48 through the hardened section in the depths of the notch 55. As described above, induction-hardened sections are continuously formed in the fillet with the notch 55, and thus the stress concentration can be reduced and the possibility of crack production can be decreased.

As already noted, the high frequency coil 59 having the narrow tip 61 shown in the drawing is effectively used in the high-frequency heating for the example of FIG. 9 previously described. However, in accordance with the present invention the high frequency coil 59 having a shape shown in FIG. 10 is not used and a normal high frequency coil having a rectangular cross section is used, as long as the width of the cross section of the coil is not more than the length of the stepped surface 58, sufficient high-frequency heating can be applied to the depths of the notch 55, and therefore, the depths of the notch 55 can be hardened.

As should be apparent from the foregoing description, an electric generator for an internal combustion engine is constructed such that not only are the hub portion and the rotor integral, but also this integration extends to an element of the one-way clutch. Thus, those components which are separated in the prior art require only one unit. As a result, bolts and/or rivets required for connecting several components can be eliminated and the total number of components can be reduced. In addition, the diameter of the one-way clutch can be reduced and its weight can be reduced with a resulting decrease in the moment of inertia. Also, with the decrease in the number of components, the number of man-hours needed to assemble the unit can be reduced. In addition, by treating the outer race forming portion with induction hardening, strength can be ensured and the amount of abrasion due to the contact with the rollers can be reduced. Furthermore, the part of the integral hub portion adjacent to the internal surface of the outer race forming portion of the one-way clutch is also treated with induction hardening in such a way that stress does not tend to concentrate in the boundary part between the outer race forming portion of the one-way clutch and the integral hub portion. Of course those skilled in the art will readily understand that the described embodiments are only exemplary of forms that the invention may take and that various changes and modifications may be made without departing from the scope of the invention, as defined by the appended claims.

## Claims

1. A method for manufacturing an electrical generator for an internal combustion engine having an engine shaft (12), said generator comprising:
a hub portion (42) adapted to be affixed for rotation with the engine shaft (12),
a rotor portion (41) integrally formed with said hub portion (42) and having a first, integral cylindrical portion (45) extending in one axial direction therefrom for carrying a plurality of circumferentially spaced permanent magnets (21) for cooperation with a stator (23), and a second, integral cylindrical portion (48) extending in an axial direction opposite to said one axial direction for forming a race for a one way clutch (47) for rotatably coupling a starter gear (28) to the engine shaft (12),
wherein the hub portion (42) has a radially extending flange (44, 45) from which the cylindrical portions (43, 48) extend, and
wherein a notch (55) defining a fillet is formed at the juncture of a first surface (54) of the second, integral cylindrical portion (48) and a second surface (56) of the radially extending flange (44);
**characterized by**
forming a stepped surface (58) in the surface of the radially extending flange (44), the stepped surface (58) extending from the notch (55), providing a high-frequency coil (59) having a rectangular cross section, the width of the cross section of the coil being not more than the length of the stepped surface (58); and applying high-frequency induction heating by the high-frequency coil (59) to the first and second surfaces (54,56) and the depths of the notch (55) for hardening.

2. The method as set forth in claim 1, wherein the cylindrical portions (43, 48) are radially spaced from each other.

3. The method as set forth in claim 2, wherein the radially extending flange (44, 45) from which the cylindrical portions (43, 48) extend has a step dividing it into radially inner and outer portions.

4. The method as set forth in claim 1, further including permanent magnets (21) affixed to the first, integral cylindrical portion (43) and a one way clutch (47) cooperating with the second, integral cylindrical portion (48), the hub portion (42) being fixed for rotation with an engine shaft (12).

5. The method as set forth in claim 4, further including a starter gear (28) journalled on the engine shaft (12) and coupled thereto by the one way clutch (47).

## Patentansprüche

1. Ein Verfahren zum Herstellen eines Elektrogenerators für einen Verbrennungsmotor mit einer Motorenwelle (12), wobei der Generator folgende Merkmale aufweist:
einen Nabenabschnitt (42), der angepasst ist, um zur Drehung mit der Motorenwelle (12) befestigt zu sein,
einen Rotorabschnitt (41), der einstückig mit dem Nabenabschnitt (42) gebildet ist und einen ersten einstückigen zylindrischen Abschnitt (45), der sich in einer Axialrichtung von demselben erstreckt, zum Tragen einer Mehrzahl umfangsmäßig beabstandeter Permanentmagneten (21) zur Zusammenarbeit mit einem Stator (23) und einen zweiten einstückigen zylindrischen Abschnitt (48), der sich in einer Axialrichtung entgegengesetzt zu der einen Axialrichtung erstreckt, zum Bilden einer Laufrille für eine Freilaufkupplung (47) zum drehmäßigen Koppeln eines Anlassergetriebes (28) mit der Motorenwelle (12) aufweist,
wobei der Nabenabschnitt (42) einen sich radial erstreckenden Flansch (44, 45), von dem aus sich die zylindrischen Abschnitte (43, 48) erstrecken, aufweist, und
wobei eine Einkerbung (55), die eine Ausrundung definiert, an dem Übergang einer ersten Oberfläche (54) des zweiten einstückigen zylindrischen Abschnitts (48) und einer zweiten Oberfläche (56) des sich radial erstreckenden Flansches (44) gebildet ist;
**gekennzeichnet durch**:
Bilden einer abgestuften Oberfläche (58) in der Oberfläche des sich radial erstreckenden Flansches (44), wobei sich die abgestufte Oberfläche (58) von der Einkerbung (55) aus erstreckt,
Bereitstellen einer Hochfrequenzspule (59) mit einem rechteckigen Querschnitt, wobei die Breite des Querschnitts der Spule nicht mehr beträgt als die Länge der abgestuften Oberfläche (58); und
Anlegen einer Hochfrequenz-Induktionserwärmung **durch** die Hochfrequenzspule (59) an die erste und die zweite Oberfläche (54, 56) und die Tiefen der Einkerbung (55) zum Härten.

2. Das Verfahren gemäß Anspruch 1, bei dem die zylindrischen Abschnitte (43, 48) radial voneinander beabstandet sind.

3. Das Verfahren gemäß Anspruch 2, bei dem der sich radial erstreckende Flansch (44, 45), von dem aus sich die zylindrischen Abschnitte (43, 48) erstrecken, eine Stufe aufweist, die denselben in einen radial inneren und einen radial äußeren Abschnitt unterteilt.

4. Das Verfahren gemäß Anspruch 1, das ferner umfasst, dass Permanentmagneten (21) an dem ersten einstückigen zylindrischen Abschnitt (43) befestigt sind und eine Freilaufkupplung (47) mit dem zweiten einstückigen zylindrischen Abschnitt (48) zusammenarbeitet, wobei der Nabenabschnitt (42) zur Drehung mit einer Motorenwelle (12) angebracht ist.

5. Das Verfahren gemäß Anspruch 4, das ferner umfasst, dass ein Anlasserzahnrad (28) an der Motorenwelle (12) gelagert ist und mit derselben durch die Freilaufkupplung (47) gekoppelt ist.

## Revendications

1. Procédé de fabrication d'un générateur électrique pour un moteur à combustion interne présentant un arbre de moteur (12), ledit générateur comprenant:
une partie de moyeu (42) adaptée pour être fixée de manière à tourner avec l'arbre de moteur (12),
une partie de rotor (41) formée de manière solidaire avec ladite partie de moyeu (42) et présentant une première partie cylindrique solidaire (45) s'étendant dans une direction axiale à partir de cette dernière, destinée à porter une pluralité d'aimants permanents (21) distants circonférentiellement en vue de coopérer avec un stator (23), et une deuxième partie cylindrique solidaire (48) s'étendant dans une direction axiale opposée à ladite une direction axiale, destinée à former une voie de roulement pour un embrayage unidirectionnel (47) en vue du couplage en rotation d'un engrenage de démarreur (28) à l'arbre de moteur (12),
dans lequel la partie de moyeu (42) présente une bride s'étendant radialement (44, 45) à partir de laquelle s'étendent les parties cylindriques (43, 48), et
dans lequel une encoche (55) définissant un cordon est formée à la jonction d'une première surface (54) de la deuxième partie cylindrique solidaire (48) et d'une deuxième surface (56) de la bride s'étendant radialement (44);
**caractérisé par**
former une surface étagée (58) dans la surface de la bride s'étendant radialement (44), la surface étagée (58) s'étendant à partir de l'encoche (55) créant une bobine haute fréquence (59) présentant une section rectangulaire, la largeur de la section de la bobine n'étant pas supérieure à la longueur de la surface étagée (58); et
appliquer un chauffage par induction haute fréquence par la bobine haute fréquence (59) aux première et deuxième surfaces (54, 56) et les profondeurs de l'encoche (55) pour durcissement.

2. Procédé selon la revendication 1, dans lequel les parties cylindriques (43, 48) sont radialement espacées entre elles.

3. Procédé selon la revendication 2, dans lequel la bride s'étendant radialement (44, 45) à partir de laquelle s'étendent les parties cylindriques (43, 48) présente un redent qui la divise en des parties radialement intérieure et extérieure.

4. Procédé selon la revendication 1, comportant par ailleurs des aimants permanents (21) fixés à la première partie cylindrique solidaire (43) et un embrayage unidirectionnel (47) coopérant avec la deuxième partie cylindrique solidaire (48), la partie de moyeu (42) étant fixée de manière à tourner avec un arbre de moteur (12).

5. Procédé selon la revendication 4, comportant par ailleurs un engrenage de démarreur (28) monté sur palier sur l'arbre de moteur (12) et couplé à ce dernier par l'embrayage unidirectionnel (47).
